# EUROPÄISCHE PATENTANMELDUNG

(11) **EP 2 033 759 A1**
(43) Veröffentlichungstag der Anmeldung: **11.03.2009**
(21) Anmeldenummer: 07017560.9
(22) Anmeldetag: 07.09.2007
(51) Int. Cl.: B29C 45/14

(54) **Verfahren zur Herstellung eines Formteils mit unterschiedlichen Dekorbereichen**

(71) Anmelder: PEGUFORM GMBH, 79268 Bötzingen (DE)
(72) Erfinder: Schirmer, Hans, 68600 Heiteren (FR)
(74) Vertreter: Neunert, Peter Andreas

(57) **Zusammenfassung**

Die vorliegende Erfindung stellt ein einfaches Verfahren zur Herstellung von Formteilen mit unterschiedlichen Dekorbereichen zur Verfügung, bei dem das Formteil ohne Wechsel des Formwerkzeugs durch stufenweises Hinterformen mit Hilfe einer Kaskadensteuerung gefertigt werden kann.

## Beschreibung

Die vorliegende Erfindung betrifft ein Verfahren zur Herstellung eines Formteils mit unterschiedlichen Dekorbereichen nach dem Oberbegriff des Anspruchs 1, eine Vorrichtung zur Herstellung entsprechender Formteile sowie die Verwendung der Formteile als Innenverkleidung von Kraftfahrzeugen, insbesondere als Instrumententafel, Seitenverkleidung oder Türverkleidung.

Es ist bekannt, Gewebematerialien, Kunststofffolien, Filz- oder Teppichmaterialien, Leder oder Lederimitate oder ähnliche Materialien, die sowohl als Dekor Verwendung finden als auch eine speziell technische Funktion haben können, mit formgebendem Kunststoff zu hinterspritzen, wobei das Gewebe oder die Dekorfolie in ein Formwerkzeug eingelegt und mit verflüssigtem thermoplastischem Kunststoff hinterformt wird.

In der EP 1 655 122 A1 wird ein Verfahren zur Herstellung eines Kunststoffteils durch Hinterspritzen, Hinterpressen oder Quellflussprägen von zumindest einem Gewebe, Dekorstoff, einer Kunststofffolie, eines Teppichstoffes oder eines anderen flexiblen Materials mit einem Kunststoff mit Hilfe eines Formwerkzeugs beschrieben. Dabei wird in einem ersten Vorgang mit einem ersten Formwerkzeug ein erstes Gewebe hinterspritzt. Anschließend wird ein Teilstück aus dem so hergestellten Halbzeug ausgestanzt und es wird ein zweites Gewebe an die Stelle des entfernten Teils des Halbzeugs eingelegt, worauf dann das Halbzeug zumindest an der Stelle des zweiten Gewebes nochmals hinterspritzt wird.

Ein Nachteil dieses Verfahrens besteht darin, dass mehrere Arbeitsschritte erforderlich sind, um zu ein Formteil mit unterschiedlichen Dekorbereichen zu erhalten. Ein weiterer Nachteil ergibt sich, wenn - wie es die Schrift in einer vorteilhaften Ausgestaltung vorsieht - ohne Werkzeugwechsel gearbeitet wird, was die Gefahr mit sich bringt, dass das Werkzeug beim Schritt des Ausstanzens durch das Stanzwerkzeug beschädigt wird.

In der Offenlegungsschrift DE 10 2005 029 849 A1 wird ein Verfahren zur Herstellung eines Verbundelements für die Fahrzeugkarosserie beschrieben, wobei mindestens zwei flächige Teile einer Außenhaut nebeneinander in ein gemeinsames Werkzeug eingelegt und in dem Werkzeug über ihre gesamte Fläche mit einer gemeinsamen Trägerstruktur versehen werden. Die in dem Dokument beschriebenen Ausführungsformen sind besonders geeignet, um Karosserieelemente, insbesondere für den Dachbereich, bei denen die Außenhaut in mindestens zwei Flächen unterteilt ist, herzustellen. Bei dem Verfahren ist vorgesehen, Teile der Außenhaut als separate Teile in ein Werkzeug einzulegen, wobei benachbarte Teile der Außenhaut am Rand dichtend überlappen können.

In dem überlappenden Bereich werden entsprechende Maßnahmen ergriffen, um ein Vor- oder Durchdringen der pastösen Kunststoffkomponente der Trägerstruktur auf die Sichtseite zu verhindern. So werden beispielsweise die überlappenden Bereiche durch Erzeugen eines Unterdruckes dichtend aufeinander gedrückt. Daneben werden in dem Dokument eine Reihe weiterer Möglichkeiten aufgezeigt, die überlappenden Bereiche abzudichten, wie z.B. Nutverbindungen, Absenkungen im Randbereich oder Stufenbildungen im Randbereich.

Nachteilig bei dem Verfahren ist, dass zusätzliche Maßnahmen ergriffen werden müssen, um ein Abdichten des Randbereiches und ein Durchdrücken der pastösen Kunststoffmasse auf die Sichtseite zu verhindern. Werden diese zusätzlichen Maßnahmen nicht ergriffen, so besteht eine akute Gefahr, dass Trägermaterial auf die Sichtseite gelangt, was zur Folge hat, dass die Formteile nicht mehr einsetzbar sind und als Ausschuss aussortiert werden müssen.

Hinzu kommt, dass die Maßnahmen zur Abdichtung häufig konstruktiv sehr aufwändig sind und dass der Übergangsbereich zwischen den unterschiedlichen Flächen häufig mit einer starken optischen Abgrenzung zwischen den einzelnen Flächen einhergeht. Dies ist im Außen- und Karosseriebereich des Kraftfahrzeugs tolerierbar, da in diesem Bereich derartige Übergänge teilweise gewollt sind oder durch entsprechende Maßnahmen, wie z.B. das Anbringen einer Leiste, kaschiert werden können. Generell werden im Außenbereich eines Kraftfahrzeugs gröbere Strukturen und Übergänge akzeptiert als im Innenbereich. Für die Herstellung von Formteilen für die Innenverkleidung von Kraftfahrzeugen, insbesondere Instrumententafeln, Seitenverkleidungen oder Türverkleidungen ist das in der DE 10 205 029 849 A1 beschriebene Verfahren nicht oder nur bedingt geeignet.

Es besteht somit weiterhin das Problem, ein unkompliziertes und leicht durchführbares Verfahren zur Herstellung von Formteilen insbesondere für Innerverkleidungen von Kraftfahrzeugen mit unterschiedlichen Dekorbereichen zu finden.

Gelöst wird die Aufgabe durch ein Verfahren mit den Merkmalen des Anspruchs 1. Bevorzugte Ausführungsformen des erfindungsgemäßen Verfahrens sind in den Unteransprüchen wiedergegeben.

Gegenstand der vorliegenden Anmeldung ist auch eine Vorrichtung zur Herstellung von Formteilen mit unterschiedlichen Dekorbereichen sowie die Verwendung dieser Formteile als Innenverkleidung für Fahrzeuge, insbesondere als Instrumententafel, Seitenverkleidung oder Türverkleidung.

Die wesentlichen Schritte des erfindungsgemäßen Verfahrens umfassen das Einlegen und die Positionierung mindestens einer ersten Dekorfolie in einem Formwerkzeug, wobei unter Dekorfolien sämtliche Materialien zu verstehen sind, die als Dekor insbesondere für die Innenverkleidung von Kraftfahrzeugen in Frage kommen, wie z.B. Gewebe, Dekorstoffe, Kunststofffolien, Teppichstoffe, Leder und Lederimitate.

Nach dem Einlegen in das Formwerkzeug kann die Dekorfolie gemäß einer vorteilhaften Ausgestaltung der vorliegenden Erfindung im Werkzeug mit Hilfe von Nadeln positioniert und fixiert werden. Für den Fall, dass der Dekorbereich bis zum Rand des Formteils vorgesehen ist, kann vorteilhaft auch eine Positionierung über Elemente außerhalb der Kavität erfolgen.

In einem nächsten Arbeitsschritt wird dann die mindestens eine erste Dekorfolie mit einem thermoplastischen Kunststoff so weit hinterformt, dass der Randbereich der Dekorfolie durch Überfluten abgedichtet ist. Erst dann wird zeitversetzt das restliche Formwerkzeug gefüllt und damit auch der zweite Dekorbereich hinterformt. Durch das primäre Überfluten des Randbereiches wird dieser Bereich:abgedichtet und es besteht beim späteren Fertigformen keine Gefahr mehr, dass aufgrund des aufgebauten Druckes schmelzflüssiges Material auf die Sichtseite des Formteils gelangt.

Technisch wird das Problem durch eine Kaskadensteuerung beim Einspritzen des Kunststoffmaterials für den Träger gelöst, mit deren Hilfe es beispielsweise gelingt, die Einspritzdüsen in den unterschiedlichen Bereichen des Formwerkzeugs zeitlich verschoben zu öffnen. Dabei ist es auch möglich, die Anordnung der Düsen im Formwerkzeug so zu positionieren, dass der zweite Dekorbereich per se zeitversetzt hinterformt wird.

Das Hinterformen selber kann durch Hinterspritzen, Hinterschäumen, Hinterpressen oder Quellflussprägen erfolgen.

Als Trägermaterial für die Dekorfolie kommen thermoplastische Kunststoffe, wie z.B. Polypropylen (PP), Polyethylen (PE), Polyurethan (PU), Acrylnitril-Butadien-Styrol (ABS), Polyamid (PA) aber auch Copolymerisate, wie Acrylnitril-Butadien-Styrol / Polycarbonat (ABS-PC), in Frage, wobei die Kunststoffe sowohl in reiner Form als auch vorteilhaft zusammen mit Fasern, wie z.B. Glasfasern, Naturfasern oder Karbonfasern, oder anderen Verstärkungsmaterialien eingesetzt werden.

Die einfachste Ausführungsform der vorliegenden Erfindung sieht vor, dass die Oberfläche eines ersten Dekorbereiches durch eine Dekorfolie ausgebildet wird, während ein zweiter Dekorbereich nach dem partiellen Hinterformen des ersten Dekorbereiches auf der Oberfläche des thermoplastischen Kunststoffes direkt ausgebildet wird. Zu diesem Zweck kann beispielsweise die Oberfläche des Formwerkzeugs entsprechende Dekorelemente, wie z.B. Narbungen oder ähnliches, aufweisen, die dann auf der Kunststoffoberfläche abgebildet werden.

Eine bevorzugte Ausgestaltung der vorliegenden Erfindung sieht vor, dass unterschiedliche Dekorfolien eingesetzt werden, wobei eine erste Dekorfolie in das Formwerkzeug eingelegt und positioniert wird und anschließend eine zweite Dekorfolie jetzt so in das Werkzeug eingelegt wird, dass der Randbereich der zweiten Dekorfolie von der ersten Dekorfolie überlappt wird. Auch in diesem Fall können die unterschiedlichen Dekorfolien mit Hilfe von Nadeln im Werkzeug fixiert und positioniert werden.

In einem nächsten Arbeitsschritt wird dann die überlappende erste Dekorfolie mit einem thermoplastischen Kunststoff so weit hinterformt, dass der Überlappungsbereich durch Überfluten abgedichtet ist. Erst dann wird zweitversetzt die zweite Dekorfolie hinterformt.

Bei einer bevorzugten Ausgestaltung der oben geschilderten Variante des erfindungsgemäßen Verfahrens ist vorgesehen, dass die zweite Dekorfolie mit Ausnahme des Bereiches, der bereits durch die erste Dekorfolie abgedeckt ist, die gesamte Oberfläche des Formwerkzeugs bedeckt.

Bei einer weiteren Variante ist vorgesehen, dass zusätzliche Bereiche des Formwerkzeugs frei sind, die dann durch eine oder mehrere weitere Dekorfolie(n) abgedeckt werden sollen, wobei die Dekorfolien dann jeweils von der Vorgängerfolie überlappt werden. Das Hinterformen erfolgt kaskadenförmig, ausgehend von der zuletzt eingelegten Dekorfolie.

Auch können bei den zuletzt geschilderten Ausführungsformen Bereiche des Formwerkzeugs vollkommen frei bleiben. Dieser Bereich wird dann bei dem kaskadenförmigen Hinterformen als letzter Bereich hinterformt, wobei dann wieder das Dekor direkt auf der Oberfläche des thermoplastischen Kunststoffs abgebildet wird.

Der Überlappungsbereich der Dekorfolien beträgt 1 bis 60 mm, wobei sich eine Überlappung zwischen 10 und 20 mm als besonders vorteilhaft sowohl für die Prozesssicherheit als auch in Bezug auf das spätere optische Erscheinungsbild herausgestellt hat.

Im Folgenden wird die vorliegende Erfindung anhand von Zeichnungen ausführlich erläutert. Dabei zeigen:
- Figur 1: einen Schnitt durch ein Formwerkzeug nach einem ersten Verarbeitungsschritt des Hinterspritzens,
- Figur 2: einen Schnitt durch das Formwerkzeug aus Figur 1 nach der Fertigstellung des Formteils,
- Figur 3: einen Schnitt durch ein Formwerkzeug nach einem ersten Verarbeitungsschritt des Hinterformens und
- Figur 4: einen Schnitt durch das Formwerkzeug aus Figur 3 nach der Fertigstellung des Formteils.

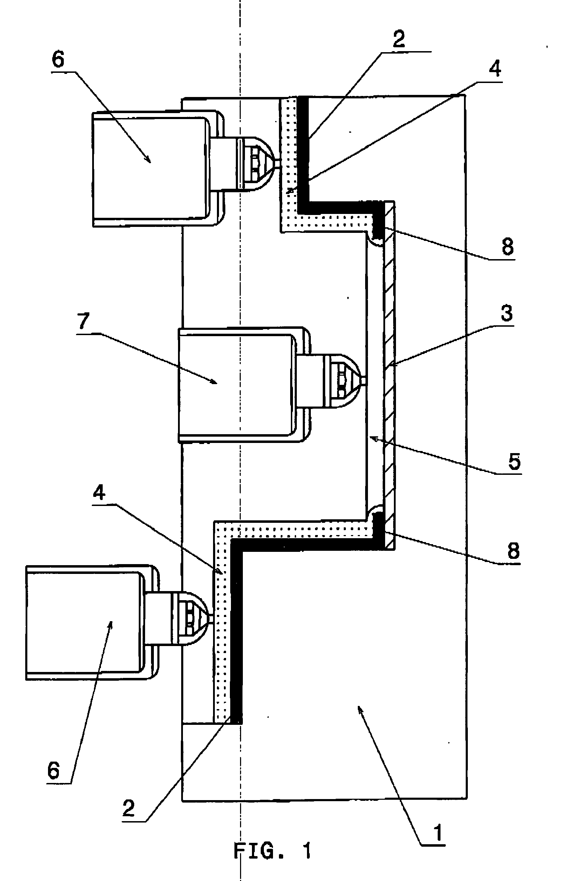

In der Figur 1 ist ein geschlossenes Formwerkzeug 1 zu erkennen, in das zwei unterschiedliche Dekorfolien 2, 3 eingelegt sind. Als Dekorfolien 2, 3 können unterschiedliche Materialien wie Gewebe, Kunststofffolien, Teppiche, Leder oder Lederimitate eingesetzt werden. Der Schnitt durch das Formwerkzeug 1 hält den Zeitpunkt eines ersten Verarbeitungsschrittes des Hinterspritzens fest, bei dem die Dekorfolien 2 bereits durch Trägermaterial 4 hinterformt sind, während die Dekorfolie 3 mit Ausnahme ihres Randbereiches noch frei in der Kavität 5 vorliegt. In den Überlappungsbereichen 8 ist eine Überflutung mit Trägermaterial 4 zu erkennen, wodurch die Abdichtung dieses Bereiches gewährleistet wird. Bei diesem ersten Verarbeitungsschritt des Hinterspritzens wurden lediglich die Düsen 6 aktiviert, während über die Einspritzdüse 7 noch kein Material in das Formwerkzeug gelangt ist. Als Materialien für den Träger kommen thermoplastische Kunststoffe, wie z.B. Polypropylen (PP), Polyethylen (PE), Polyurethan (PU), Acrylnitril-Butadien-Styrol (ABS), Acrylnitril-Butadien-Styrol / Polycarbonat Copolymerisat (ABS-PC) und Polyamid), in Frage, wobei bei einer vorteilhaften Ausgestaltung der vorliegenden Erfindung diese Materialien zusammen mit Verstärkungsmaterialien, wie z.B. Glasfasern, Naturfasern oder Karbonfasern, eingesetzt werden.

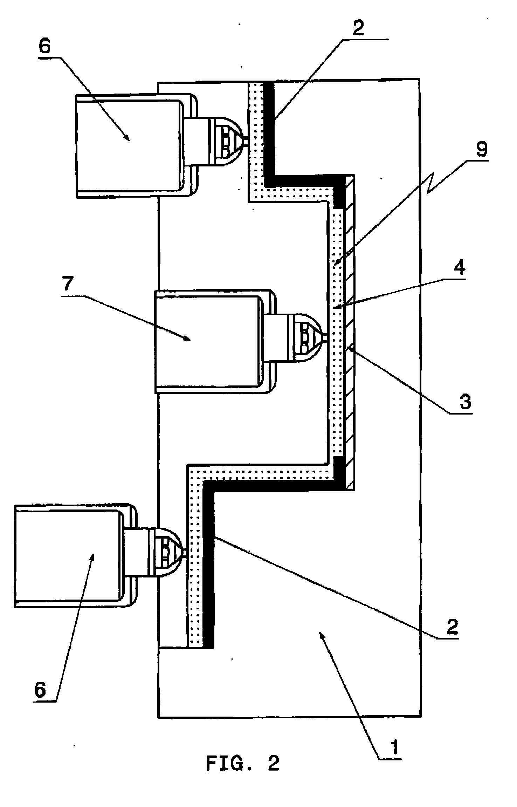

In der Figur 2 ist das fertiggestellte Formteil 9 in dem noch geschlossenen Formwerkzeug 1 zu erkennen. In diesem Fall sind beide Dekorfolien 2 und 3 mit dem Trägermaterial 4 hinterformt, wobei die Hinterformung der Dekorfolien 3 im Wesentlichen über die Einspritzdüse 7 erfolgt ist.

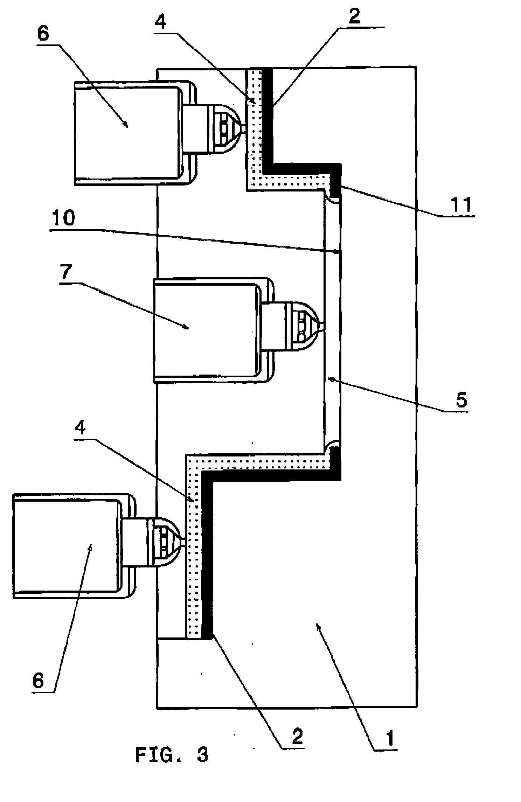

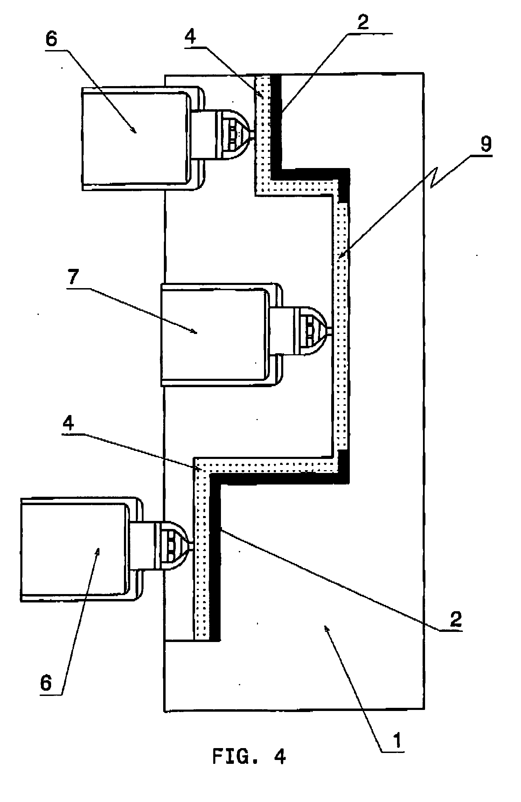

Die Figur 3 zeigt ein geschlossenes Formwerkzeug, in das lediglich eine Dekorfolie 2 eingelegt ist. Ein Oberflächenbereich 10 des Formwerkzeugs 1 ist frei. Auch hier kommen als Dekorfolie 2 unterschiedliche Materialien wie Gewebe, Kunststofffolien, Teppiche, Leder oder Lederimitate in Frage. Der Schnitt durch das Formwerkzeug 1 hält in einer Momentaufnahme den Zeitpunkt eines ersten Verarbeitungsschrittes des Hinterspritzens fest, bei dem die Dekorfolie 2 bereits durch das Trägermaterial 4 vollständig hinterformt ist, während der Oberflächenbereich 10 mit Ausnahme des Randbereiches 11 der Dekorfolie 2 noch frei in der Kavität 5 vorliegt. In den Randbereichen 11 ist eine Überflutung mit Trägermaterial 4 zu erkennen, wodurch die Abdichtung dieses Bereiches gewährleistet wird. Bei diesem ersten Verarbeitungsschritt des Hinterformen wurden wieder lediglich die Düsen 6 aktiviert, während über die Einspritzdüse 7 noch kein Material in das Formwerkzeug 1 gelangt ist. Die Einspritzdüse 7 wird zeitversetzt kurzfristig aktiviert, so dass auch im Bereich des direkten Kontaktes mit der Formzeugoberfläche 10 eine gleichmäßige Ausbildung der Formteiloberfläche gewährleistet, ist. Durch eine entsprechende Strukturierung der Oberfläche 10 des Formwerkzeugs, wie z.B. eine Narbung oder Ähnliches, kann nun der entsprechende Dekorbereich direkt auf dem Trägermaterial 4 des Formteils 9 ausgebildet werden. Das fertige Formteil 9 ist in der Figur 4 wiedergegeben. Als Materialien für den Träger kommen wieder thermoplastische Kunststoffe, wie z.B. Polypropylen (PP), Polyethylen (PE), Polyurethan (PU), Acrylnitril-Butadien-Styrol (ABS), Acrylnitril-Butadien-Styrol / Polycarbonat Copolymerisat (ABS-PC) und Polyamid (PA), in Frage, wobei bei einer vorteilhaften Ausgestaltung der vorliegenden Erfindung diese Materialien zusammen mit Verstärkungsmaterialien, wie z.B. Glasfasern, Naturfasern oder Karbonfasern, eingesetzt werden.

In den Figuren 1 bis 4 sind lediglich zwei Ausführungsformen der vorliegenden Erfindung dargestellt, um das generelle Prinzip zu erläutern. Weitere Variationen in Bezug auf das Werkzeug, die Gestaltung des Übergangsbereiches, die kaskadenförmige Anordnung der Düsen oder die Art des Hinterformens ergeben sich für den Fachmann aus seinem Fachwissen und sind von den nachfolgenden Ansprüchen umfasst.

### Bezugszeichenliste

- 1: Formwerkzeug
- 2: erste Dekorfolie
- 3: zweite Dekorfolie
- 4: Träger
- 5: Kavität
- 6: erste Düse
- 7: zweite Düse
- 8: Überlappungsbereich
- 9: Formteil
- 10: Formwerkzeugoberfläche
- 11: Randbereich

## Patentansprüche

1. Verfahren zur Herstellung eines Formteils (9) mit unterschiedlichen Dekorbereichen, umfassend die Schritte
a) Einlegen und Positionierung mindestens einer Dekorfolie in ein Formwerkzeug zur Ausbildung einer Oberfläche eines ersten Dekorbereiches,
b) partielles Hinterformen der mindestens einen Dekorfolie mit einem thermoplastischen Kunststoff als Träger und
c) anschließendes Hinterformen des zweiten Dekorbereiches,
**dadurch gekennzeichnet, dass**
der Randbereich der Dekorfolie durch Überfluten abgedichtet wird, wobei das stufenweise Hinterformen der unterschiedlichen Dekorbereiche mit Hilfe einer Kaskadensteuerung erfolgt, die ein zeitlich verschobenes Hinterformen der unterschiedlichen Dekorbereiche ermöglicht.

2. Verfahren nach Anspruch 1,
**dadurch gekennzeichnet, dass**
die Oberfläche des zweiten Dekorbereiches durch die Abbildung der Formwerkzeugoberfläche auf dem Träger direkt ausgebildet wird.

3. Verfahren nach Anspruch 1,
**dadurch gekennzeichnet, dass**
die Oberfläche des zweiten Dekorbereiches durch eine in das Formwerkzeug eingelegte zweite Dekorfolie ausgebildet wird, wobei die erste Dekorfolie die zweite Dekorfolie in ihrem Randbereich überlappt.

4. Verfahren nach Anspruch 3,
**dadurch gekennzeichnet, dass**
der Überlappungsbereich der Dekorfolien 1 bis 60 mm beträgt.

5. Verfahren nach einem der Anspruch 3 oder 4,
**dadurch gekennzeichnet, dass**
der Überlappungsbereich der Dekorfolien vorzugsweise 10 bis 20 mm beträgt.

6. Verfahren nach einem der Ansprüche 1 bis 5,
**dadurch gekennzeichnet, dass**
als Dekorfolien Gewebe, Dekorstoffe, Kunststofffolien, Teppichstoffe, Leder und Lederimitate eingesetzt werden.

7. Verfahren nach einem der Ansprüche 1 bis 6,
**dadurch gekennzeichnet, dass**
die Positionierung der Dekorfolien im Werkzeug mit Hilfe von Nadeln erfolgt.

8. Verfahren nach einem der Ansprüche Anspruch 1 bis 7,
**dadurch gekennzeichnet, dass**
die Positionierung der Dekorfolien über Elemente außerhalb der Kavität erfolgt.

9. Verfahren nach einem der Ansprüche 1 bis 8,
**dadurch gekennzeichnet, dass**
als thermoplastischer Kunststoff Polypropylen (PP), Polyethylen (PE), Polyurethan (PU), Acrylnitril-Butadien-Styrol (ABS), Acrylnitril-Butadien-Styrol / Polycarbonat Copolymerisat (ABS-PC) und Polyamid (PA) eingesetzt wird.

10. Verfahren nach Anspruch 9,
**dadurch gekennzeichnet, dass**
der thermoplastische Kunststoff Verstärkungsmaterialien, wie z.B. Glasfasern, Naturfasern oder Karbonfasern, umfasst.

11. Verfahren nach einem der Ansprüche 1 bis 10,
**dadurch gekennzeichnet, dass**
das Hinterformen durch Hinterspritzen, Hinterschäumen, Hinterpressen oder Quellflussprägen erfolgt.

12. Verwendung eines Formteils, hergestellt nach einem der Ansprüche 1 bis 11, als Innenverkleidung für Kraftfahrzeuge, insbesondere Instrumententafel, Türverkleidung oder Seitenverkleidung.

13. Vorrichtung zur Herstellung eines Formteils nach einem der vorgenannten Verfahren, wobei die Vorrichtung ein Formwerkzeug mit einer kaskadenförmigen Anordnung von Einspritzdüsen zum zeitlich versetzten Hinterformen unterschiedlicher Dekorbereiche umfasst.
